# EUROPEAN PATENT APPLICATION

(11) **EP 4 446 634 A1**
(43) Date of publication of application: **16.10.2024**
(21) Application number: 22903072.1
(22) Date of filing: 31.10.2022
(51) Int. Cl.: F16K 31/06, F16K 1/00

(54) **SOLENOID VALVE AND AIR CONDITIONING SYSTEM HAVING SAME**

(30) Priority: 07.12.2021 CN 202123073715 U
(71) Applicant: Zhejiang Dunan Artificial Environment Co., Ltd., Shaoxing Zhejiang 311835 (CN)
(72) Inventor: JIN, Yong, Shaoxing, Zhejiang 311835 (CN); ZHANG, Lian, Shaoxing, Zhejiang 311835 (CN)
(74) Representative: Petraz, Gilberto Luigi
(86) International application number: PCT/CN2022/128684
(87) International publication number: WO 2023/103648

(57) **Abstract**

A solenoid valve (100) and an air conditioning system (200) are provided. The solenoid valve (100) includes a valve body (10) and a piston (20). A main valve port (11) is defined on the valve body (10). The piston (20) is provided in the valve body (10) and is capable of moving in the valve body (10) to open or close the main valve port (11). The piston (20) is provided with an installing cavity (21). A check valve core (30), a positioning sleeve (40) and a fixing unit (50) are provided in the installing cavity (21). The positioning sleeve (40) is fixed in the installing cavity (21) via the fixing unit (50). The check valve core (30) is capable of moving in the installing cavity (21) and abutting against the positioning sleeve (40).

## Description

### CROSS-REFERENCE TO RELATED APPLICATION

This application claims priority to Chinese patent application No. 202123073715.4, filed on December 7, 2021, and titled "SOLENOID VALVE AND AIR CONDITIONING SYSTEM HAVING SAME". The content of the above identified application is hereby incorporated herein in its entirety by reference.

### TECHNICAL FIELD

The present invention relates to a field of cooling device technology, and in particular, to a solenoid valve and an air conditioning system.

### BACKGROUND

A solenoid valve is a component controlled by electromagnetism, used in industrial control systems to control on or off of a medium, or to adjust parameters such as a flow direction and a flow rate of the medium, so as to control as expected.

In the related technology of solenoid valve, a positioning sleeve is in interference fit with an inner wall of an installing cavity, so that the solenoid valve is frequently out of operation.

### SUMMARY

According to various embodiments of the present invention, a solenoid valve is provided.

The present invention provides a solenoid valve. The solenoid valve includes a valve body and a piston. A main valve port is defined on the valve body. A piston is provided in the valve body and is capable of moving in the valve body to open or close the main valve port. The piston is provided with an installing cavity. A check valve core, a positioning sleeve and a fixing unit are provided in the installing cavity. The positioning sleeve is fixed in the installing cavity via the fixing unit. The check valve core is capable of moving in the installing cavity and abutting against the positioning sleeve.

In some embodiments, the fixing unit includes an internal thread and an external thread. The internal thread is located on an inner wall of the installing cavity. The external thread is located on an outer wall surface of the positioning sleeve. The external thread and the internal thread fit with each other by installing the positioning sleeve in the installing cavity.

In some embodiments, an operation portion is formed on an end of the positioning sleeve away from the check valve core. The operation portion is capable of fitting with an external tool to drive the positioning sleeve to screw in or out.

In some embodiments, the operation portion includes a straight slot or a cross recess, the straight slot or the cross recess is defined on an end of the positioning sleeve away from the check valve core. Alternatively, the operation portion includes a hexagonal groove, the hexagonal groove is defined on the end of the positioning sleeve away from the check valve core.

In some embodiments, a dovetail groove is defined on an inner wall of the installing cavity, and a distance between a wall of the dovetail groove and an axis of the installing cavity gradually increases along a direction towards the positioning sleeve from the check valve core. An end of the positioning sleeve away from the check valve core has an outward expansion.

In some embodiments, an end of the dovetail groove towards the check valve core includes a step surface. An end of the positioning sleeve towards the check valve core abuts against the step surface.

In some embodiments, a barb portion is formed on an end of the dovetail groove away from the step surface. The positioning sleeve is installed in the dovetail groove, and an end of the positioning sleeve away from the check valve core abuts against the barb portion.

In some embodiments, a piston cavity is defined on an end of the piston away from the main valve port. The check valve core includes a valve core cavity. The check valve core is capable of realizing a one-way circulation from the piston cavity to the valve core cavity. A through hole is defined on the positioning sleeve, and the through hole is in communication with the valve core cavity.

In some embodiments, a second spring is provided in the piston cavity, a cover plate is arranged on an end of the valve body away from the main valve port, and two ends of the second spring abuts against the cover plate and an inner wall of the piston cavity, respectively.

In some embodiments, a guiding valve is installed on the valve body, the guiding valve includes a sleeve and a movable iron core assembly installed in the sleeve. The valve body is provided with a guiding valve port in communication with the main valve port. The movable iron core assembly is capable of moving in the sleeve to open or close the guiding valve. The valve body is provided with a channel in communication with the piston cavity. When the guiding valve port is opened, the guiding valve port is in communication with the piston cavity by the channel.

In some embodiment, a static iron core is installed in the sleeve. The movable iron assembly includes a movable iron core, a first spring and a guiding valve core. Two ends of the first spring abut against the static iron core and the movable iron core, respectively. The guiding valve core is connected to an end of the movable iron core away from the static iron core. The movable iron core is capable of moving in the sleeve and driving the guiding valve core to detach from or abut against the guiding valve core, resulting in opening or closing the guiding valve port.

In some embodiments, an end surface of the valve body is provided with a first port. A side surface of the valve body is provided with a second port being in communication with the main valve port and the guiding valve port. An axis of the first port is parallel to an axis of the guiding valve. An axis of the second port is parallel to an axis of the piston. When the main valve port is opened, the first port is in communication with the second port; and when the main valve port is closed, a communication between the first port and the second port is cut off.

The present invention further provides an air conditioning system including above solenoid valve.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a schematic diagram of a solenoid valve in one or more embodiments.
FIG. 2 is a schematic diagram of a piston in one or more embodiments.
FIG. 3 is a partial enlargement view of portion A in FIG. 2.
FIG. 4 is a schematic diagram of a piston in another embodiment.
FIG. 5 is a partial enlarged view of portion B in FIG. 4.
FIG. 6 is a schematic diagram of an air conditioning system of one or more embodiments.

Reference signs are as follows.

100 represents a solenoid valve; 10 represents a valve body; 11 represents a main valve port; 12 represents a guiding valve port; 13 represents a channel; 14 represents a cover plate; 15 represents a first port; 16 represents a second port; 20 represents a piston; 21 represents an installing cavity; 211 represents a dovetail groove; 2111 represents a step surface; 2112 represents a barb portion; 22 represents a piston cavity; 221 represents a second spring; 30 represents a check valve core; 31 represents a valve core cavity; 40 represents a positioning sleeve; 41 represents an operation portion; 42 represents a through hole; 50 represents a fixing unit; 51 represents an internal thread; 52 represents an external thread; 60 represents a guiding valve; 61 represents a sleeve; 62 represents a movable iron core assembly; 621 represents a movable iron core; 622 represents a guiding valve core; 623 represents a first spring; 63 represents a static iron core; 200 represents an air conditioning system.

### DETAILED DESCRIPTION

In order to make objectives, solutions, and advantages of this application clearer, a detailed explanation of this disclosure is provided blow in combination with drawings and detailed descriptions. It should be understood that the detailed description described here is only for a purpose of explaining this application and does not limit the scope of protection of this disclosure.

It should be noted that when a component is referred to "install on" another component, it can be directly on another component or there can be a centered component. When a component is referred to "set to" another component, it can be directly on another component or there can be a centered component. When a component is referred to "fix on" another component, it can be directly on another component or there can be a centered component. The terms "vertical", "horizontal", "top", "down", "left" and "right" and similar expressions used herein are only for the purpose of illustration and do not represent the only embodiment.

Unless otherwise defined, all technical and scientific terms used herein have same meaning as commonly understood by those skilled in the art of this disclosure. The terms used in the specification of this application are only for the purpose of describing specific embodiments and are not intended to limit this disclosure. In the present invention, the term "or/and" includes any and all combinations of one or more related listed items.

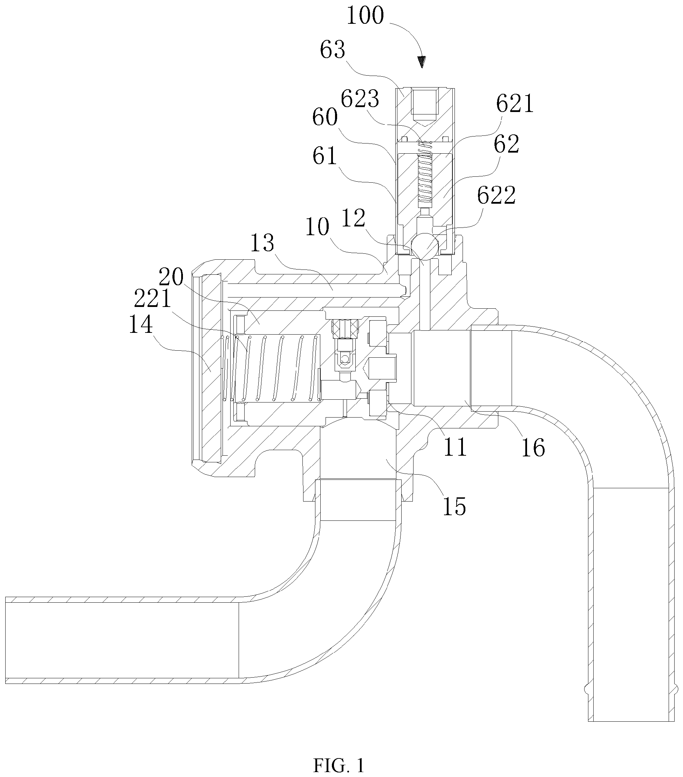

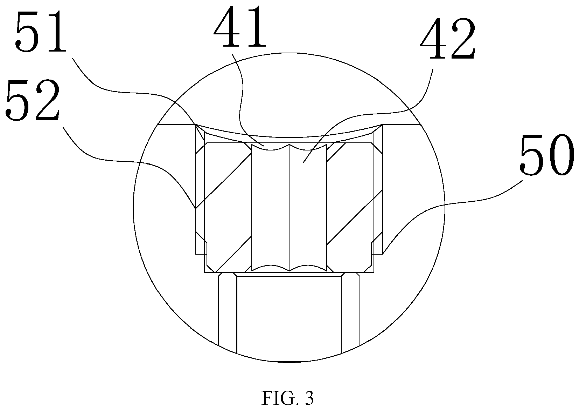

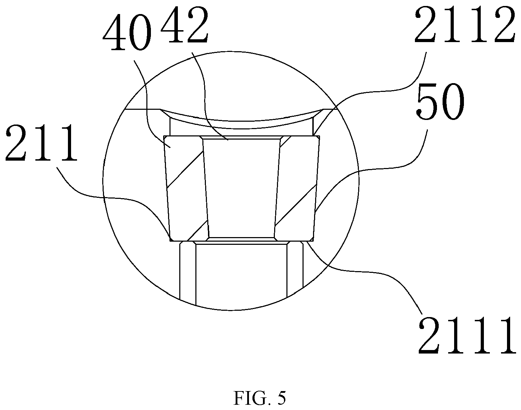

Referring to FIGs. 1 to 5, a solenoid valve 100 is industrial equipment controlled by electromagnetism, which is an automation basic component configured to control a liquid and an actuator, and not limited in fields such as hydraulic, pneumatic, etc. The solenoid valve 100 is configured to adjust a direction, a rate of flow, a speed of flow and other parameters of a medium in an industrial control system. The solenoid valve 100 can be cooperated with different circuits to realize an expected control, so that accuracy and flexibility of control can be ensured.

In the related technology of solenoid valve, a positioning sleeve may be in interference fit with an inner wall of the installing cavity, so that the solenoid valve is frequently out of operation.

In order to solve such problem, the present invention provides a solenoid valve 100. The solenoid valve 100 includes a valve body 10 and a piston 20. A main valve port 11 is defined on the valve body 10. The piston 20 is provided in the valve body 10. The piston 20 is capable of moving in the valve body 10 to open or close the main valve port 11. The piston 20 is provided with an installing cavity 21. A check valve core 30, a positioning sleeve 40 and a fixing unit 50 is provided in the installing cavity 21. The positioning sleeve 40 is fixed in the installing cavity 21 via the fixing unit 50. The check valve core 30 is capable of moving in the installing cavity 21 and abutting against the positioning sleeve 40.

The positioning sleeve 40 is fixed in the installing cavity 21 via the fixing unit 50 in the present invention, so as to fix and limit the positioning sleeve 40, resulting in preventing the positioning sleeve 40 from detaching from the installing cavity 21.

Referring to FIG. 1, a guiding valve 60 is installed on the valve body 10. The guiding valve 60 includes a sleeve 61. A solenoid is installed outside of the sleeve 61. A static iron core 63 and a movable iron core assembly 62 is installed in the sleeve 61. The static iron core 63 is fixed on an end of the sleeve 61. The movable iron core assembly 62 includes a movable iron core 621, a first spring 623 and a guiding valve core 622. Two ends of the first spring 623 abut against the static iron core 63 and the movable iron core 621, respectively. The guiding valve core 622 is connected to an end of the movable iron core 621 away from the static iron core 63. The valve body 10 is provided with a guiding valve port 12. The movable iron core 621 is capable of moving in the sleeve 61 and driving the guiding valve core 622 to detach from or abut against the guiding valve port 12, resulting in opening or closing the guiding valve port 12.

Furthermore, a piston cavity 22 is defined on an end of the piston 20 away from the main valve port 11. A second spring 221 is provided in the piston cavity 22. A cover plate 14 is arranged on an end of the valve body 10 away from the main valve port 11. Two ends of the second spring 221 abut against the cover plate 14 and an inner wall of the piston cavity 22, respectively. The check valve core 30 includes a valve core cavity 31, and is capable of realizing a one-way circulation of a medium from the piston cavity 22 to the valve core cavity 31. A channel 13 in communication with the piston cavity 22 is provided on the valve body 10, and when the guiding valve port 12 is opened, the guiding valve port 12 is in communication with the piston cavity 22 by the channel 13.

In detail, an end surface of the valve body 10 is provided with a first port 15. A side surface of the valve body 10 is provided with a second port 16 being in communication with the main valve port 11 and the guiding valve port 12. An axis of the first port 15 is parallel to an axis of the guiding valve 60, and an axis of the second port 16 is parallel to an axis of the piston 20. When the main valve port 11 is opened, the first port 15 is in communication with the second port 16. When the main valve port 11 is closed, a communication between the first port 15 and the second port 16 is cut off.

The solenoid valve 100 can realize a dual-way circulation in the present invention. When the refrigerant flows from the second port 16 to the valve body 10, a pulling force towards the cover plate 14 is applied on the piston 20, the piston 20 is detached from the main valve port 11, and the second spring 221 is in a compression state. The main valve port 11 is opened, and the refrigerant can flow from the second port 16 to the first port 15. However, in the conventional technology, after a period of time, the piston 20 may slowly move towards a direction away from the cover plate 14 and abut against the main valve port 11 under a restoring force of the second spring 221, so as to cut off the communication between the first port 15 and the second port 16. To avoid such phenomenon and to realize, when the main valve port 11 is opened, a continuously communication between the first port 15 and the second port 16, the check valve core 30 is disposed on the piston 20. When the main valve port 11 is opened, an electromagnetic coil is energized, the movable iron core 621 moves towards the static iron core 63 under an attractive force of the static iron core 63, and the guiding valve core 622 driven by the movable iron core 621 is detached from the guiding valve port 12. The guiding valve port 12 is opened, a part of the refrigerant flows from the guiding valve port 12 to the channel 13 and flows to the piston cavity 22 via a gap between the piston 20 and the cover plate 14. Since the piston cavity 22 is in communication with the installing cavity 21, at this time, the refrigerant can push the check valve core 30 to be opened, a through hole 42 being in communication with the valve core cavity 31 is defined on the positioning sleeve 40, and the through hole 42 is in communication with the first port 15. By the through hole 42 being in communication with the valve core cavity 31, it is conducive for a circulation of the refrigerant. The refrigerant can flow from the through hole 42 to the first port 15 through the valve core cavity 31, such process is a continuous decompression process, such that a pressure of the piston cavity 22 is always less than a pressure of the refrigerant in the second port 16. Therefore, the piston 20 can overcome the restoring force of the second spring 221 to move towards the cover plate 14, thereby realizing a continuous communication between the first port 15 and the second port 16.

When the refrigerant flows from the first port 15 to the valve body 10, the solenoid is energized, the movable iron core 621 moves towards the static iron core 63 under the attractive force of the static iron core 63, and the guiding valve core 622 driven by the movable iron core 621 is detached from the guiding valve port 12. At this time, the guiding valve port 12 is opened, in one hand, the refrigerant of the piston cavity 22 flows to the guiding valve port 12 by the channel 13, and then flows from the guiding valve port 12 to the second port 16, thereby realizing a continuous depression of the piston cavity 22; in the other hand, since a gap between the piston 20 and an inner wall of the valve body 10 is extremely small, in other words, when the piston 20 slides in the valve body 10, an effect similar to damping can be realized. It is required to overcome a damping force to drive the piston 20 to slide in the valve body 10, i.e, when a pressure difference change value of one side of the piston 20 is sufficient to overcome such damping force, the piston 20 can slide. As shown in FIG. 1, a pressure difference released by the piston cavity 22 through the guiding valve port 12 is always greater than a pressure difference supplying to the piston cavity 22 by a slide of the piston 20 relative to the inner wall of the valve body 10, i.e, a pressure difference released from a left side of the piston 20 can overcome a damping force between the piston 20 and the inner wall of the valve body 10, so that the piston 20 moves towards the cover plate 14 under the pressure difference released from the piston 20, and the main valve port 11 is opened, the refrigerant can flow from the first port 15 to the second port 16.

During a reciprocating motion of the check valve core 30 in the installing cavity 21, it may be prone to a risk of detaching from the installing cavity 21. Therefore, in this embodiment, the positioning sleeve 40 configured to limit the check valve core 30 is installed in the installing cavity 21, the check valve core 30 can abut against the positioning sleeve 40 in the installing cavity 21 during a movement process of the check valve core 30, thereby preventing the check valve core 30 from detaching from the installing cavity 21.

Furthermore, in related technology of solenoid valve, a positioning sleeve is in interference fit with an inner wall of the installing cavity, so that the solenoid valve often fails. Based on above problem, the present invention provides a fixing way for the positioning sleeve 40, thereby preventing the positioning sleeve 40 from detaching and failing.

The positioning sleeve 40 of the present invention is cylindrical, therefore, when the positioning sleeve 40 is installed in the installing cavity 21, a connecting area between surfaces of two ends of the positioning sleeve 40 and the inner wall of the installing cavity 21 is larger, a contact between the positioning sleeve 40 and the installing cavity 21 is more stable and even, which is not easy to cause a problem of the positioning sleeve 40 detaching from the installing cavity 21.

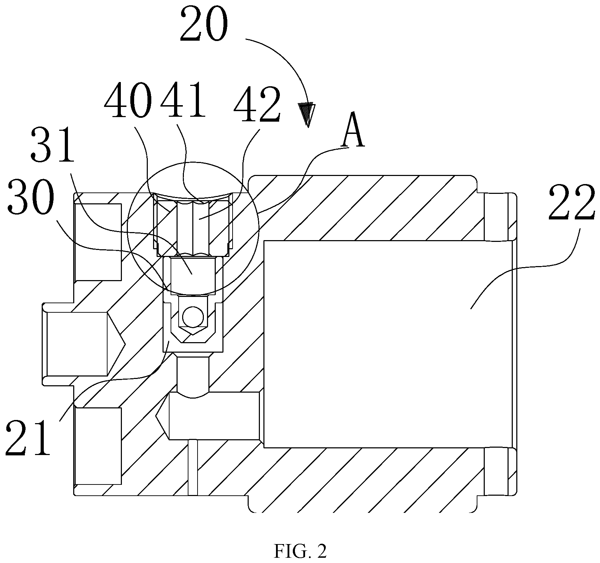

Referring to FIGs. 2 to 3, in an embodiment, the fixing unit 50 includes an internal thread 51 and an external thread 52. The internal thread 51 is located on the inner wall of the installing cavity 21. The external thread 52 is located on an outer wall surface of the positioning sleeve 40. The positioning sleeve 40 is installed on the installing cavity 21 and the external thread 52 and the internal thread 51 fit with each other, thereby fixing the positioning sleeve 40 and preventing the positioning sleeve 40 from detaching from the installing cavity 21. In other ways, a way of the positioning sleeve 40 installed on the installing cavity 21 adopts a way of a thread connection, a fixing performance of which is greater than a way of an interference fit, which is more hard to detach.

In order to further improve a tightness of the positioning sleeve 40 installed in the installing cavity 21, an operation portion 41 is formed on an end of the positioning sleeve 40 away from the check valve core 30. The operation portion 41 is cooperated with an external tool to drive the positioning sleeve 40 to screw in or out. In some embodiments, the operation portion 41 can be a straight slot or a hexagonal groove, the straight slot or the hexagonal groove is defined on the end of the positioning sleeve 40 away from the check valve core 30, which is conducive for the external tool to insert into the straight slot or the hexagonal groove, so as to drive the positioning sleeve 40 to screw in or out. In other embodiments, the operation portion 41 can be a cross recess, which can be operated by a cross recess screwdriver.

By arranging the operation portion 41 on the end of the positioning sleeve 40 away from the check valve core 30, it is conducive to operating the positioning sleeve 40 through the operation portion 41 by the external tool. In one hand, it can further improve a tight fit between the internal thread 51 and the external thread 52 which is based on a threaded connection of the positioning sleeve 40 to the installing cavity 21; in the other hand, it is conducive to detaching and repairing the positioning sleeve 40.

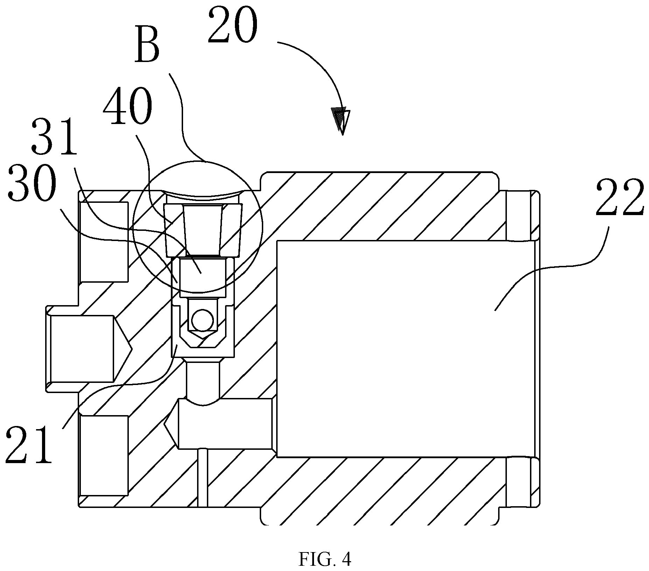

Referring to FIGs. 4 to 5, in another embodiment, a dovetail groove 211 is defined on the inner wall of the installing cavity 21. An axis of the dovetail groove 211 and an axis of the installing cavity 21 are collinear. A distance between a wall of the dovetail groove 211 and the axis of the installing cavity 21 gradually increases towards the positioning sleeve 40 from the check valve core 30. A step surface 2111 is formed on an end of the dovetail groove 211 towards the check valve core 30. When the positioning sleeve 40 is installed in the dovetail groove 211, an end of the positioning sleeve 40 towards the check valve core 30 abuts against the step surface 2111, such that the step surface 2111 can facilitate to an installation of the positioning sleeve 40 and restrict the positioning sleeve 40.

After the end of the positioning sleeve 40 towards the check valve core 30 abutting against the step surface 2111, the end of the positioning sleeve 40 away from the check valve core 30 has an outward expansion, so as to further fix and restrict the positioning sleeve 40, thereby prevent the positioning sleeve 40 from detaching.

In some embodiments, after the positioning sleeve 40 being entirely inserted into the dovetail groove 211, it undergoes a process to create an outward expansion, i.e., the positioning sleeve 40 with an original cylindrical shape is put into the dovetail groove 211 and subjected to an outward expansion process. Such process is more convenient.

In particular, during an expansion of the end of the positioning sleeve 40 away from the check valve core 30, a barb portion 2112 can be relatively formed by a part of the inner wall of the installing cavity 21. Alternatively, an end of the inner wall of the installing cavity 21 towards an end of the positioning sleeve 40 away from the check valve core 30 can be compressed inwards to form the barb portion 2112, which is to abut an end of the positioning sleeve 40 away from the check valve core 30 against the barb portion 2112 to form a limitation, thereby further improving a fixing performance of the positioning sleeve 40 in the dovetail groove 211 and preventing the positioning sleeve 40 from detaching.

The present invention further provides a solution.

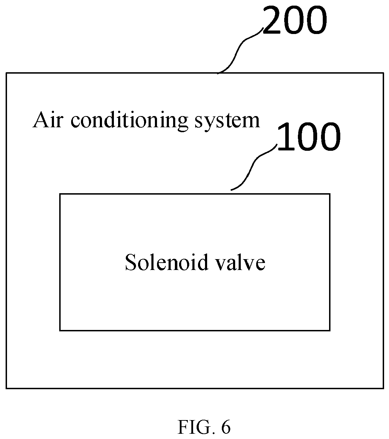

Referring to FIG. 6, in the present invention, an air conditioning system 200 is provided. The air conditioning system 200 includes a solenoid valve 100. Such air conditioning system 200 also includes same advantages with the above solenoid valve 100.

The various technical features of above embodiments can be combined in any way. To make the description concise, all possible combinations of the various technical features in the above embodiments have not been described. However, as long as there is no contradiction in the combination of these technical features, they should be considered within the scope of this specification.

The above embodiments merely express several embodiments of the present invention, and their description is more specific and detailed, but cannot be understood as a limitation on the scope of the present invention. It should be pointed out that, for ordinary skill in the art, several modifications and improvements can be made without departing from concept of this disclosure, all of which fall within the scope of protection of this disclosure. Therefore, the scope of protection of this disclosure shall be based on attached claims.

## Claims

1. A solenoid valve, comprising a valve body and a piston, wherein a main valve port is defined on the valve body, the piston is provided in the valve body and capable of moving in the valve body to open or close the main valve port,
**characterized in that** the piston is provided with an installing cavity, a check valve core, a positioning sleeve and a fixing unit are provided in the installing cavity, the positioning sleeve is fixed in the installing cavity via the fixing unit, and the check valve core is capable of moving in the installing cavity and abutting against the positioning sleeve.

2. The solenoid valve of claim 1, wherein the fixing unit comprises an internal thread and an external thread, the internal thread is located on an inner wall of the installing cavity, the external thread is located on an outer wall surface of the positioning sleeve, and the external thread and the internal thread fit with each other by installing the positioning sleeve in the installing cavity.

3. The solenoid valve of claim 2, wherein an operation portion is formed on an end of the positioning sleeve away from the check valve core, and the operation portion is capable of driving the positioning sleeve to screw in or out.

4. The solenoid valve of claim 3, wherein the operation portion comprises a straight slot or a cross recess, the straight slot or the cross recess is defined on an end of the positioning sleeve away from the check valve core; or
the operation portion comprises a hexagonal groove, the hexagonal groove is defined on the end of the positioning sleeve away from the check valve core.

5. The solenoid valve of claim 1, wherein a dovetail groove is defined on an inner wall of the installing cavity, and a distance between a wall of the dovetail groove and an axis of the installing cavity gradually increases along a direction towards the positioning sleeve from the check valve core; and
an end of the positioning sleeve away from the check valve core has an outward expansion.

6. The solenoid valve of claim 5, wherein an end of the dovetail groove towards the check valve core comprises a step surface and an end of the positioning sleeve towards the check valve core abuts against the step surface.

7. The solenoid valve of claim 5, wherein a barb portion is formed on an end of the dovetail groove away from the step surface, the positioning sleeve is installed in the dovetail groove, and an end of the positioning sleeve away from the check valve core abuts against the barb portion.

8. The solenoid valve of claim 1, wherein a piston cavity is defined on an end of the piston away from the main valve port, the check valve core comprises a valve core cavity, the check valve core is capable of realizing a one-way circulation from the piston cavity to the valve core cavity, a through hole is defined on the positioning sleeve, and the through hole is in communication with the valve core cavity.

9. The solenoid valve of claim 8, wherein a second spring is provided in the piston cavity, a cover plate is arranged on an end of the valve body away from the main valve port, and two ends of the second spring abuts against the cover plate and an inner wall of the piston cavity, respectively.

10. The solenoid valve of claim 8, wherein a guiding valve is installed on the valve body, the guiding valve comprises a sleeve and a movable iron core assembly installed in the sleeve, the valve body is provided with a guiding valve port in communication with the main valve port, the movable iron core assembly is capable of moving in the sleeve to open or close the guiding valve; and
the valve body is provided with a channel in communication with the piston cavity, and when the guiding valve port is opened, the guiding valve port is in communication with the piston cavity by the channel.

11. The solenoid valve of the claim 10, wherein a static iron core is installed in the sleeve, the movable iron assembly comprises a movable iron core, a first spring and a guiding valve core, two ends of the first spring abut against the static iron core and the movable iron core, respectively, the guiding valve core is connected to an end of the movable iron core away from the static iron core, and the movable iron core is capable of moving in the sleeve and driving the guiding valve core to detach from or abut against the guiding valve core, resulting in opening or closing the guiding valve port.

12. The solenoid valve of claim 10, wherein an end surface of the valve body is provided with a first port, a side surface of the valve body is provided with a second port being in communication with the main valve port and the guiding valve port, an axis of the first port is parallel to an axis of the guiding valve, an axis of the second port is parallel to an axis of the piston, and when the main valve port is opened, the first port is in communication with the second port; when the main valve port is closed, a communication between the first port and the second port is cut off.

13. An air conditioning system, **characterized by** comprising the solenoid valve of any one of claims 1 to 12.
